# EUROPÄISCHE PATENTSCHRIFT

(11) **EP 0 654 629 B1**
(45) Veröffentlichungstag und Bekanntmachung des Hinweises auf die Patenterteilung: **17.12.1997**
(21) Anmeldenummer: 93118662.1
(22) Anmeldetag: 19.11.1993
(51) Int. Cl.: F16L 21/00, F17D 5/04

(54) **Prüfbare und sanierungsfähige Rohrverbindung**
Testable and reconstructable pipe joint
Raccord de tuyaux testable et assainissable

(43) Veröffentlichungstag der Anmeldung: 24.05.1995
(73) Patentinhaber: INSPECTA-PIPE GESELLSCHAFT FÜR UMWELTSICHERE ABWASSERLEITUNG m.b.H., 45711 Datteln (DE)
(72) Erfinder: Stein, Dietrich, Prof. Dr.-Ing., D-44892 Bochum (DE); Körkemeyer, Karsten, Dipl.-Ing., D-44623 Herne (DE)
(74) Vertreter: May, Hans Ulrich, Dr.

(56) Entgegenhaltungen:
- EP-A- 0 015 559
- DE-A- 2 405 426
- DE-C- 497 563
- DE-U- 9 100 378
- FR-A- 727 036
- FR-A- 1 043 251
- GB-A- 2 038 976
- US-A- 2 571 236
- US-A- 2 597 193

## Beschreibung

Die Erfindung betrifft eine Prüfeinrichtung zur Kontrolle der Dichtheit von Rohrverbindungen, insbesondere bei begehbaren Rohren für Entwässerungskanäle und -leitungen.

Die bekannten Prüfeinrichtungen zur Kontrolle der Dichtheit von Rohrverbindungen bestehen aus Prüfgeräten, mit denen der Anfang und das Ende der Haltung einer Rohrleitung während der Prüfzeit verschlossen werden. Anschließend wird in dieser Haltung mit Wasser oder Luft ein bestimmter Überdruck erzeugt und dabei die Dichtheit der Rohre und der Rohrverbindungen geprüft. Bei Großrohren, zum Beispiel bei begehbaren Betonrohren ab etwa DN 1000, erfolgt an Stelle einer Leitungsprüfung in vielen Fällen nur eine Dichtheitsprüfung jeder einzelnen Rohrverbindung unter Verwendung eines axial versetzbaren Muffenprüfgerätes, das die betreffende Rohrverbindung im Rohrinneren während der Prüfzeit vorübergehend abdichtend überbrückt. Beide Arten von Dichtheitsprüfungen werden in der Regel nur einmal, und zwar nach dem Bau und vor der Inbetriebnahme der Rohre durchgeführt.

In all den Fällen, in denen - z.B. bei Entwässerungskanälen in der Wasserschutzzone II von Wassergewinnungsgebieten, in Gebieten mit hohen Grundwasserständen, in Bergsenkungsgebieten, in Erdbeben- oder anderen Problemzonen - auch während des Betriebes einer Rohrleitung die Dichtheit ihrer Rohrverbindungen zur Verhinderung von Abwasseraus- und/oder Grundwassereintritten entweder dauernd oder in bestimmten zeitlichen Abständen kontrolliert werden muß, sind die eingangs beschriebenen Prüfmethoden wegen der damit verbundenen Notwendigkeit, die Rohrleitung während der Prüfzeit für mehrere Stunden restlos außer Betrieb zu setzen, entweder überhaupt nicht durchführbar oder mit einem hohen Kostenaufwand für Stauräume, Umleitungen, Pumpanlagen usw. zur Vorflutsicherung verbunden. Aus diesen Gründen werden in solchen Problemfällen vielerorts die bekannten doppelwandigen Kanäle, bestehend aus einer inneren Medien- und einer äußeren Schutzrohrleitung, verlegt. Hierbei ist die äußere Schutzrohrleitung im normalen Betriebszustand leer. Beim Auftreten von Undichtigkeiten leitet die Schutzrohrleitung das in sie eingetretene Wasser oder Abwasser in den nächsten Schacht, wo es per Sichtkontrolle oder per Signalgeber festgestellt und kurzfristig für die Beseitigung von der Leckage gesorgt werden kann. Doppelwandige Kanäle sind im Vergleich zu einwandigen Rohrleitungen mehr als doppelt so teuer. Diese Kostengründe und/oder geologische Gesichtspunkte, z.B. eine zu geringe Überdeckung des geplanten doppelwandigen Kanals, können vor allem bei größeren Rohrdimensionen dazu führen, daß dringend benötigte derartige Kanäle entweder erst mit langjähriger Verspätung oder überhaupt nicht gebaut werden, und daß dadurch eine sich immer mehr vergrößernde Umweltbelastung, z.B. auf dem Gebiet der Boden- und Grundwasserverschmutzung, über Jahre oder Jahrzehnte weiter bestehen bleibt.

Die heute bekannten prüfbaren Rohrverbindungen sind dadurch gekennzeichnet, daß eine herkömmliche Dichtung (z.B. Gleitring-, Lippendichtung) entweder durch eine zweite identische oder andersartige Dichtung zur Schaffung eines Prüfraumes ergänzt wird. Dieser ist über eine Prüfmittelleitung mit einem Prüfmedium zu beaufschlagen.

Allen bekannten derartigen Konstruktionen ist gemeinsam, daß die den Prüfraum begrenzenden Dichtungen bei der Rohrverlegung unmittelbar miteingebaut werden müssen, da die für die Dichtwirkung erforderliche Kompression (Verpressung) des Elastomeren grundsätzlich erst beim Zusammenfügen der Rohre erzeugt wird.

Der Grad der Kompression ist damit abhängig von der Größe des verbleibenden Dichtspaltes, d.h. von Maßtoleranzen und dem Grad der Zusammenschiebung der Rohre, und nachträglich nicht mehr beeinflußbar. Im Falle von Relativbewegungen der gegeneinander abzudichtenden Rohre können entweder die Dichtwirkung verloren gehen oder die Dichtmittel beschädigt werden.

Die bekannten prüfbaren Rohrverbindungen erlauben nicht in jedem Fall die zweifelsfreie Beurteilung, welche der den Prüfraum begrenzenden Dichtmittel ggf. schadhaft sind. Dies bedeutet, daß bei festgestellten Undichtigkeiten zur Vermeidung von Medienverlusten relativ umfangreiche Prüfungs- und Sanierungsmaßnahmen notwendig sind. Weitere Nachteile heute bekannter prüfbarer Rohrverbindungen sind:
- Verschmutzungs- und Beschädigungsgefahr während der Bauarbeiten
- Der zur Aufnahme der Dichtmittel erforderliche Dichtspalt (Muffe-Spitzende) ist unzugänglich.

Aus GB-A-2 038 976 ist eine Dichtung für Rohrverbindungen bekannt, bei der eine unmittelbar an der Rohrinnenwand anliegende, die Rohrverbindungsstelle überbrückende Elastomermanschette als echte durchgehende Dichtung ausgebildet ist und eine radial innen liegende, die erste Manschette axial umgreifende zweite Elastomermanschette vorzugsweise Durchbrechungen für ein kontrolliertes Leck aufweist, das im Falle eines Bruchs der Rohrverbindung und der außen liegenden, an sich dichten Elastomermanschette für ein kontrolliertes Austreten des im Rohr transportierten Mediums, besonders Gas, sorgt, so daß dieses in der Umgebung festgestellt werden kann, wenn auch nicht unbedingt in der Nähe der Rohrbruchstelle. Diese bekannte Dichtung für Rohrverbindungen weist aber keine Prüfeinrichtung auf, sondern ist nur auf Mittel zur Verhinderung und gegebenenfalls Begrenzung von Leckagen gerichtet.

Der Erfindung liegt die Aufgabe zugrunde, eine Rohrverbindung mit einer Prüfeinrichtung zur Kontrolle der Dichtheit der Rohrverbindung zu schaffen, mit der bei den - im Vergleich zu doppelwandigen Kanälen - kostengünstigeren einwandigen Rohrleitungen eine Kontrolle der Dichtheit der Rohrverbindung entweder dauernd oder in bestimmten Zeitabständen auch während des Betriebes der Rohrleitung möglich ist, ohne daß diese während der Dauer der Prüfung stillgelegt zu werden braucht.

Diese Aufgabe wird erfindungsgemäß durch die Vereinigung der Merkmale des Patentanspruchs 1 gelöst.

Bevorzugte Ausführungsformen sind in den Unteransprüchen angegeben.

Die Mehrkosten, die durch den bei der erfindungsgemäßen Prüfeinrichtung in jeder Rohrverbindung erforderlichen Einbau einer doppelten Dichtung und einer in der Regel nur ganz gering dimensionierten Prüfmittelleitung sowie durch das Vorhalten einer Druckmeßeinrichtung (Manometer, Standrohr o.ä.) und einer Druckquelle entstehen, sind erheblich geringer als der Bau eines doppelwandigen Kanals. Außerdem bietet das Vorhandensein von zwei unabhängig voneinander funktionierenden Dichtungsmanschetten bei jeder Rohrverbindung schon ohne die Durchführung von Druckkontrolle eine doppelte Dichtsicherheit, die im Falle einer zusätzlichen Außendichtung weiter verbessert wird. Mit der erfindungsgemäßen Prüfeinrichtung versehene großformatige Entwässerungskanäle, wie z.B. die diversen Sammelkanäle in Großstädten, die bis zu Durchmessern von etwa DN 4000 aus vorgefertigten Rohren hergestellt werden, können diese nunmehr auf relativ einfache Weise - genau wie doppelwandige Kanäle - ebenfalls laufend oder in bestimmten Zeitabständen von z.B. zwei bis drei Jahren während ihrer ganzen Betriebszeit, die hundert und noch mehr Jahre betragen kann, auf Dichtheit geprüft werden. Derartige großformatige Entwässerungskanäle lassen sich allein schon aus technischen Gründen nicht als doppelwandige Kanäle ausführen; hinzu kommt, daß sich der Bau solcher großformatiger Doppelrohrkanäle in den meisten Fällen bereits aus Kostengründen verbietet. Bei den in der Wasserschutzzone II von Wassergewinnungsgebieten liegenden einwandigen Entwässerungskanälen müssen Wasserdichtheitsprüfungen auch nach der Inbetriebnahme des Kanals durchgeführt werden können. Desweiteren muß gewährleistet sein, daß bei Undichtigkeiten unverzüglich Maßnahmen möglich sind, die eine Grundwasserbeeinträchtigung ausschließen. Mit der neuen Prüfeinrichtung läßt sich diese Forderung auf einfache Weise erfüllen, indem die Hohlräume sämtlicher Rohrverbindungen einer jeden in der Wasserschutzzone II liegenden Kanalhaltung über eine durchgehende Prüfmittelleitung dauernd unter Prüfuber- oder -unterdruck stehen. Überschreitet eine Druckveränderung einen bestimmten Maximalwert, erfolgen Einzelprüfungen an jeder Rohrverbindung, bis die Leckstelle lokalisiert ist. Da die Druckmeßeinrichtung bereits eine Leckage anzeigt, wenn nur eine der beiden Dichtungen einer Rohrverbindung undicht geworden ist, bleibt deren Dichtheit durch die in der Regel noch intakte zweite Dichtung weiterhin gewährleistet. Die erforderlichen Reparaturarbeiten können also bereits durchgeführt werden, bevor die betreffende Rohrverbindung tatsächlich undicht und das Grundwasser gefährdet worden ist. Eine Möglichkeit zur Vereinfachung der Prüfung der Dichtheit der Rohrverbindungen ergibt sich dadurch, daß der Hohlraum an eine Prüfmittelleitung angeschlossen ist, die zur Über- oder Unterdruckquelle führt. Eine bauliche Vereinfachung der Prüfeinrichtung besteht darin, daß die Druckmeßeinrichtung in die Prüfmittelleitung eingebaut ist. Um die Prüfmittelleitung möglichst sicher und raumsparend unterzubringen sieht eine weitere Ausgestaltung der Erfindung vor, daß die Prüfmittelleitung auf einem Teilabschnitt ihrer Gesamtlänge innerhalb der Wandung des Rohres verläuft. Eine zeitlich möglichst kurze Prüfung der Dichtheit einer Rohrleitung läßt sich dadurch erzielen, daß die Hohlräume von mehreren Rohrverbindungen an ein und dieselbe Prüfmittelleitung angeschlossen sind. Zur dauernden Überwachung der Dichtheit einer Rohrleitung ist nach einer weiteren Ausgestaltung der Erfindung vorgesehen, daß die Prüfmittelleitung nach dem Erreichen des Prüfzustandes verschlossen und/oder die Überoder Unterdruckquelle abgestellt ist.

Die schnellstmögliche Informierung der Kontrollstelle von einer in einer Rohrverbindung aufgetretenen Undichtigkeit ist dadurch erreichbar, daß die Druckmeßeinrichtung mit einem, beim Eintreten eines vorbestimmten Über- oder Unterdruckes bzw. bei normalem Luftdruck sich selbsttätig auslösenden Signalgeber verbunden ist.
Um die Lage einer oder einiger undichter Rohrverbindungen kurzfristig zu ermitteln, wird nach einer anderen Ausbildung der Erfindung vorgeschlagen, daß nur jeweils ein Hohlraum oder einige Hohlräume einer größeren Anzahl von Rohrverbindungen an jeweils nur eine Prüfmittelleitung angeschlossen ist bzw. sind.

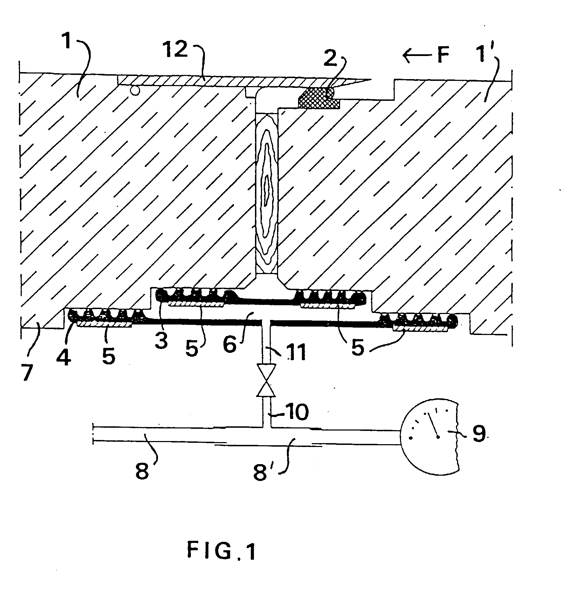

Anhand des in der Zeichnung dargestellten Ausführungsbeispieles wird die Erfindung näher erklärt. Fig. 1 zeigt eine Vortriebsrohrverbindung mit eingebauter Prüfeinrichtung, davon die Druckmeßeinrichtung in der Ansicht. Die in Fig. 1 dargestellte, mit einer Prüfeinrichtung ausgestattete Rohrverbindung besteht aus den Enden der beiden Rohre (1 und 1'), aus einem elastischen Gleitring als äußere Dichtung (2), die bei der Verlegung des Rohres (1') in Richtung des Pfeils F unter den im gezeigten Fall vorhandenen Führungsring (12) geschoben wird, und aus der innenliegenden Dichtung, bestehend aus zwei übereinanderliegenden und mit Hilfe von Stahlspannringen (5) vorgespannten Innenmanschetten (3 und 4). Der zwischen den beiden Dichtungen (3 und 4) befindliche Hohlraum (6) steht über eine im Rohrscheitel (7) angeordnete Prüfmittelleitung (8), die im Stoßfugenbereich ein elastisches Zwischenstück (8') aufweist, mit einer im nächsten Kontrollschacht befindlichen Druckmeßeinrichtung (9) in Verbindung. Der Anschluß jedes einzelnen Hohlraumes (6) an die durchgehende Prüfmittelleitung (8) erfolgt mittels eines Abzweiges und einer Verbindungsleitung (10). Zur Prüfung der Dichtheit der Rohrverbindungen einer Kanalhaltung wird die Prüfmittelleitung (8) an eine Über- oder Unterdruckquelle angeschlossen. Als Überdruckquelle dienen bei Verwendung eines gasförmigen Prüfmittels (Luft o.ä.) ein Kompressor oder eine Gas- oder Druckluftflasche; bei Verwendung eines flüssigen Prüfmittels (Wasser o.ä.) eine Druckpumpe, ein Wasserleitungsanschluß oder ein Standrohr. Wird mit Unterdruck geprüft, kommt in der Regel eine Vakuumpumpe zur Verwendung.

Bei der Verwendung eines flüssigen Prüfmediums ist - insbesondere bei großen Nennweitendie hydrostatische Druckdifferenz zwischen Scheitel und Sohle der Leitung zu berücksichtigen (bei DN 2500 beträgt diese 0,25 bar, d.h. 50 % des Prüfdruckes gemäß DIN 4033). Sobald im Laufe des Prüfvorganges die Hohlräume (6) der zu prüfenden Rohrverbindungen unter einem Überdruck von z.B. 1 bar oder unter einem Unterdruck von z.B. 0,5 bar stehen, wird die Verbindung zur Über- bzw. Unterdruckquelle unterbrochen und die Prüfmittelleitung (8) verschlossen. Die in die Prüfmittelleitung (8) eingebaute Druckmeßeinrichtung (9) zeigt sodann an, ob das gesamte Prüfsystem, bestehend aus Rohrverbindungen, Prüfmittelleitung (8) und Armaturen den Über- oder Unterdruck während der Prüfzeit von z.B. einer Stunde hält oder nicht hält. Bei der Verwendung eines - z.B. 5 m hohen - Standrohres zur Wasserdruckprüfung mit 0,5 bar läßt sich das ggf. mit einer Skala versehene Standrohr selbst als Druckmeßeinrichtung (8) benutzen. Tritt während der Prüfzeit Über- oder Unterdruckverlust ein, erfolgt sodann bei begehbaren Rohrleitungen zur Lokalisierung der Undichtigkeit die Prüfung jeder einzelnen Rohrverbindung durch das Prüfpersonal. Besitzt jede einzelne Rohrverbindung eine eigene Prüfmittelleitung (8), läßt sich die Undichtigkeit sofort lokalisieren und noch schneller beseitigen. Ist aus Sicherheitsgründen eine dauernde Kontrolle der Dichtheit der Rohrverbindungen eines Entwässerungskanal erforderlich, werden die Hohlräume (6) der Rohrverbindungen dauernd unter Über- oder Unterdruck gehalten. Auftretende Druckverluste werden dann vorzugsweise über optische oder akustische Signalgeber ohne zeitliche Verzögerung an einen zentralen Kontrollstand weitergemeldet.

Bei der Prüfung mit Überdruck bleiben kleinere Prüfmittelverluste auch im Falle zweier undichter Manschetten einer Dichtung unkritisch, solange der Prüfdruck oberhalb des hydrostatischen Grundwasserdruckes bzw. des Leitungsinnendruckes konstant gehalten werden kann, d.h. es kann weder Abwasser exfiltrieren, noch Grundwasser infiltrieren. Im Scheitelbereich besitzt die breitere der beiden Manschetten eine Öffnung (11) zum Hohlraum, an die die Verbindungsleitung (10) lösbar angeschlossen ist.

Vor Montage der Dichtung, d.h. nach Beendigung der Verlegearbeiten bzw. des Vortriebes, werden die Kontaktbereich zwischen den Elastomermanschetten und der Rohrwandung beidseitig der Rohrspiegel gereinigt und evtl. zur Erzielung einer glatten Oberfläche geschliffen sowie mit einem Gleitmittel eingestrichen. Die Manschetten, deren Durchmesser auf den der Leitung abgestimmt ist, werden von Hand so über die abzudichtende Rohrverbindung gelegt und dem Rohr angepaßt, daß die Dichtungsprofile rechts und links der Rohrverbindung an der Rohrwandung anliegen. Ausbildung und Anzahl der Dichtlippen ist variabel. Als Material kann für die Dichtung Neoprene (Nitrilbutadien) oder auch Teflon eingesetzt werden. Bei höherer Beanspruchung, besonders bei Außenwasserdruck, können beide Dichtungstypen mit einer Spezialeinlage, z.B. aus Nylon, verstärkt werden.

Zur Vermeidung zu großer Verformungen der Manschette während einer Dichtheitsprüfung können die Elastomermanschetten auch durch einvulkanisierte Gewebeeinlagen, z.B. aus Stahlgeweben oder Geweben aus Kohlenstoff-, Mineral- oder Glasfasern verstärkt werden. Stattdessen kann zur Abstützung der Manschetten auch ein dritterschwebender Spannring zwischen den beiden jeweils äußeren Spannringen (5) eingebaut werden, oder die Spannringe (5) können wesentlich breiter ausgebildet sein, so daß sie bis auf einen schmalen Mittel spalt die gesamte Elastomermanschette (3,4) abdecken und stützen.

Sind während der Betriebszeit keine Verformungen der Rohrverbindung zu erwarten, kann auch ein einziger Spannring (5) vorzugsweise aus Edelstahl verwendet werden, der die gesamte Elastomermanschette (3,4) abdeckt. In diesem Fall können an Stelle einer breiten Elastomermanschette auch je zwei schmale Dichtungsprofile an dem einen und anderen Rohrende verwendet werden. Mit Hilfe einer radial wirkenden und hydraulisch oder pneumatisch arbeitenden Einbauvorrichtung werden die Spannringe (5) gegen die Dichtungsprofile (3,4) und diese gegen die Rohrwandung gepreßt und durch ein Paßstück oder eine andere mechanische Spannvorrichtung fixiert.

Bei den Spannringen handelt es sich nicht um geschlossene, sondern um offene spreizbare Ringe. Diese können auch aus mehreren Segmenten bestehen, die örtlich zu einem Ring montiert werden. Durch das erwähnte Expandieren der Spannringe, bzw. der Kreissegmente werden die Elastomermanschetten gegen die Rohrwandung gepreßt und zur Erzeugung der Dichtwirkung komprimiert. Durch Einfügen eines oder mehrerer Paßstücke oder eines bzw. mehrerer mechanischer Spannvorrichtungen, wie Gewindestücke zwischen die offenen Enden jedes Spannringes, bzw. der Kreissegmente werden diese geschlossen und die Ringwirkung wird hergestellt, so daß die expandierbare Einbauvorrichtung entfernt werden kann.

Bei einer besonderen Ausführungsform der Erfindung verwendet man profilierte Spannelemente, d.h. solche, die an einer oder beiden Außenkanten U-Profile aufweisen, die als Führungen für nachträglich zur Stützung der Manschette eingeschobene leichte Stahlbleche dienen.

Unmittelbar nach Einbau der Dichtung wird der Prüfraum (6) vorzugsweise mit Druckluft beaufschlagt. Im Falle eines festgestellten Druckabfalls kann auf eine Undichtigkeit der Dichtung geschlossen werden, so daß diese nachzuspannen ist - oder wenn diese Maßnahme nicht zu dem gewünschten Ergebnis führt - eine oder beide Manschetten ersetzt werden. Zur Feststellung, welche der beiden Manschetten gegebenenfalls undicht ist, kann die Dichtung mit einer geeigneten Flüssigkeit, Z.B. Nekal, abgeseift werden.

Diese Vorgehensweise empfiehlt sich auch als Zusatzuntersuchung im Falle einer im Rahmen der regelmäßig zu wiederholenden Dichtheitsprüfung mit Druckluft festgestellten Undichtigkeit.

Zur Kostenreduzierung kann gemäß einer weiteren Ausgestaltung der Erfindung die unten liegende Manschettendichtung durch einen PE-HD-Streifen ersetzt werden, der auf die beiden gegenüberliegenden, speziell präparierten Rohrendbereiche aufgeklebt oder geschweißt wird und so die Rohrverbindungsbereiche überbrückt. Zur Realisierung optimaler Klebe- oder Schweißbedingungen besitzen die Rohre an den Rohrenden auf der Innenseite jeweils eine schmale, umlaufende PE-HD-Auskleidung, die im Rohrbeton verankert ist.

Bei der erfindungsgemäßen Prüfeinrichtung erhöht das Vohandensein zweier voneinander unabhängiger Manschetten die Funktionssicherheit des Gesamtsystems (Redundanz). Außerdem bleibt die Dichtwirkung auch bei ungleichmäßigen Setzungen benachbarter Rohre (1, 1') sowie bei Stauchung und Dehnung des Rohrstranges erhalten.

Im Unterschied zum Stand der Technik werden die erfindungsgemäßen beschriebenen Dichtungsmanschetten vorzugsweise erst nach Beendigung der Bauarbeiten eingebaut. Durch die Art des Einbaus und der Montage mit Hilfe spezieller Spannringe sowie die Ausbildung der Dichtungsmanschette ist im Gegensatz zu allen bisher bekannten Dichtungen unabhängig von Rohrtoleranzen eine gleichmäßige Kompression des Elastomeren realisierbar, die auch bei Relativverschiebungen der abzudichtenden Rohre unbeeinflußt bleibt.

Da Dichtungsmanschetten und Spannringe voneinander unabhängige Bauteile sind, können im Falle festgestellter Undichtigkeiten entweder Manschetten und/oder Spannringe ersetzt oder die Spannringe zur Erhöhung der Kompression des Elastomeren nachgespannt werden. Bei den bekannten prüfbaren Rohrverbindungen ist dies nicht möglich, da immer mindestens eines der beiden den Prüfraum begrenzenden Dichtmittel unzugänglich ist.

## Patentansprüche

1. Rohrverbindung mit einer Prüfeinrichtung zur Kontrolle der Dichtheit der Rohrverbindung, insbesondere von begehbaren Rohren für Entwässerungskanäle und -leitungen, **gekennzeichnet durch** die Kombination folgender Merkmale:
a) die Rohrverbindung besitzt eine auf ihrer Innenseite angeordnete Dichtung, die aus zwei übereinander angeordneten Elastomermanschetten (3,4) besteht;
b) die Elastomermanschetten (3,4) sind jeweils durch zwei an ihren Längskanten angeordnete und dem Rohrinneren zugewandte nach außen spreizbare offene einstückige oder aus mehreren Segmenten bestehende Spannringe (5) aus korrosionsfestem Stahl oder Kunststoff gegen die Rohrinnenseite angedrückt und fixiert, wobei ein Paßstück oder mehrere Paßstücke oder eine Spannvorrichtung bzw. mehrere mechanische Spannvorrichtungen zwischen die offenen Enden jedes Spannringes bzw. der Kreissegmente eingefügt sind, um den Ring zu schließen;
c) zwischen den beiden Elastomermanschetten (3,4) liegt ein Hohlraum (6), der durch eine aus ihm herausführende Verbindungsleitung (10,11) mit einer Druckmeßeinrichtung (9) verbunden ist, die eine Kontrolle des im Hohlraum (6) herrschenden Über- oder Unterdrucks ermöglicht;
c) in diesem Hohlraum (6) befindet sich zumindest während der Prüfdauer ein flüssiges oder gasförmiges Medium als Prüfmittel unter Über- oder Unterdruck.

2. Rohrverbindung nach Anspruch 1, **dadurch gekennzeichnet,** daß zur Abstützung der Manschetten (3,4) ein dritter schwebender Spannring zwischen die beiden jeweils äußeren Spannringe (5) eingebaut ist.

3. Rohrverbindung nach Anspruch 1, **dadurch gekennzeichnet,** daß die Spannringe (5) die gesamte Elastomermanschette (3,4) bis auf einen schmalen Mittel spalt abdecken und stützen.

4. Rohrverbindung Anspruch 1, **dadurch gekennzeichnet,** daß ein einziger Spannring (5) vorzugsweise aus Edelstahl die gesamte Elastomermanschette (3,4) abdeckt.

5. Rohrverbindung Anspruch 4, **dadurch gekennzeichnet**, daß statt einer breiten Elastomermanschette (3,4) zwei schmale Dichtungsprofile an jedem der Rohrenden verwendet werden.

6. Rohrverbindung Anspruch 1 oder 2, **dadurch gekennzeichnet,** daß die mit einer Manschette (3,4) zusammenwirkenden Spannelemente (5) mit je einem Profil, insbesondere U-Profil ausgebildet sind und die einander zugewandten Profile als Führung für nachträglich zur Stützung der Manschette einschiebbare leichte Stahlbleche dienen.

7. Rohrverbindung einem der Ansprüche 1 bis 6, **dadurch gekennzeichnet,** daß der Hohlraum (6) an eine verschließbare Prüfmittelleitung (8) angeschlossen ist, die zur abtrennbaren Über- oder Unterdruckquelle führt.

8. Rohrverbindung einem der Ansprüche 1 bis 7, **dadurch gekennzeichnet,** daß die Druckmeßeinrichtung (9) in die Prüfmittelleitung (8) eingebaut ist.

9. Rohrverbindung einem der Ansprüche 1 bis 8, **dadurch gekennzeichnet,** daß die Prüfmittelleitung (8) zumindest auf einem Teilabschnitt ihrer Gesamtlänge innerhalb der Wandung eines der oder beider Rohre (1) verläuft.

10. Rohrverbindung nach den Ansprüchen 1 bis 9, **dadurch gekennzeichnet,** daß die Hohlräume (6) von mehreren Rohrverbindungen an ein und dieselbe Prüfmittelleitung (8) anschließbar sind.

11. Rohrverbindung nach einem der Ansprüche 1 bis 10, **dadurch gekennzeichnet**, daß die Druckmeßeinrichtung (9) mit einem bei Erreichen eines vorbestimmten Über- oder Unterdruckes bzw. bei normalem Luftdruck selbsttätig auslösenden Signalgeber verbunden ist.

12. Rohrverbindung nach einem der Ansprüche 1 bis 11, **dadurch gekennzeichnet**, daß die Dichtung im Fall einer Undichtigkeit durch Nachspannen der Spannringe (5) oder durch Ersetzen wenigstens einer der beiden Manschetten (3,4) reparierbar ist.

13. Rohrverbindung nach einem der Ansprüche 1 bis 12, **dadurch gekennzeichnet**, daß zum Schutz der innen liegenden Dichtung (3) auf der dem Grundwasser zugewandten Seite der Rohrverbindung ein herkömmlicher Dichtring (2) angeordnet ist.

## Claims

1. Pipe joint comprising a testing device for controlling the seal of a pipe joint, in particular of pipes for drainage channels and pipes which can be walked in, **characterised by** a combination of the following features:
a) the pipe joint has a seal arranged at its interior and comprising two stacked elastomer sleeves (3, 4);
b) the elastomer sleeves (3, 4) are respectively pressed onto the tube interior wall and fixed by two respective clamping rings (5) of stainless steel or plastic, which are arranged at their longitudinal edges and oriented towards the pipe interior, outwardly expandable, open and made in one piece or composed of a plurality of segments, and one or more fitting pieces or a clamping device or a plurality of mechanical clamping devices are inserted between the open ends of each clamping ring or the circular segments in order to seal the ring;
c) between the two elastomer sleeves (3, 4) lies a cavity (6) which is connected via an outwardly oriented connecting pipe (10, 11) to a pressure measuring device (9) which permits a positive or negative pressure in the cavity (6) to be controlled;
d) this cavity (6) contains, at least during the test duration, a liquid a gaseous medium as a testing medium under positive or negative pressure.

2. Pipe joint according to Claim 1, **characterised in that** a third floating clamping ring is installed between the two respective outer clamping rings (5) for the purpose of supporting the sleeves (3, 4).

3. Pipe joint according to Claim 1, **characterised in that** the clamping rings (5) cover and support the entire elastomer sleeve (3,4) with the exception of a narrow centre gap.

4. Pipe joint according to Claim 1, **characterised in that** a single clamping ring (5), which is preferably made of stainless steel, covers the entire elastomer sleeve (3. 4).

5. Pipe joint according to Claim 4, **characterised in that,** in place of a wide elastomer sleeve (3, 4), two narrow seal profiles are used at each pipe end.

6. Pipe joint according to Claim 1 or 2, **characterised in that** the clamping elements (5), which co-act with a sleeve (3, 4) are fitted with a respective profile, in particular a U-profile, and those profiles which are oriented towards each other serve as a guide for subsequently insertible light steel plates to support the sleeve.

7. Pipe joint according to one of Claims 1 to 6, **characterised in that** the cavity (6) is connected to a sealable testing medium pipe (8) which connects to a disconnectible positive or negative pressure source.

8. Pipe joint according to one of Claims 1 to 7, **characterised in that** the pressure medium device (9) is built into the testing medium pipe (8).

9. Pipe joint according to one of Claims 1 to 8, **characterised in that** the testing medium pipe (9) extends at least on a section of its total length within the wall of one or both of the pipes (1).

10. Pipe joint according to Claims 1 to 9, **characterised in that** the cavities (6) of a plurality of pipe joints are connectible to one and the same testing medium pipe (8).

11. Pipe joint according to one of s 1 to 10, **characterised in that** the pressure measuring device (9) is connected to a signalling device which automatically triggers on reaching a specified positive or negative pressure or at normal air pressure.

12. Pipe joint according to one of Claims 1 to 11, **characterised in that** the seal is repairable in the event of a leak by re-tightening the clamping rings (5) or by replacing at least one of the two sleeves (3, 4).

13. Pipe joint according to one of Claims 1 to 12, **characterised in that** a conventional sealing ring (2) is fitted at the side of the pipe joint oriented towards ground water for the purpose of protecting the inner seal (3).

## Revendications

1. Raccord de tuyaux comportant un dispositif de contrôle pour le contrôle de l'étanchéité du raccord de tuyaux, en particulier de tuyaux accessibles à la circulation intérieure pour canaux et conduites d'écoulement de l'eau, caractérisé par la combinaison des caractéristiques suivantes:
a) le raccord de tuyaux possède une garniture d'étanchéité qui est disposée sur sa face intérieure et qui est constituée de deux manchons élastomères (3, 4) disposés l'un au-dessus de l'autre;
b) les manchons élastomères (3, 4) sont, chacun, pressés et fixés contre la face intérieure du tuyau par deux anneaux de serrage (5), en acier résistant à la corrosion ou en plastique, qui sont en une pièce ou sont constitués de plusieurs segments et s'ouvrent, en s'expansant vers l'extérieur, en direction de l'intérieur du tuyau, une pièce d'ajustement, ou plusieurs pièces d'ajustement ou un dispositif de serrage, ou plusieurs dispositifs mécaniques de serrage, étant insérés entre les extrémités ouvertes de chaque anneau de serrage ou des segments circulaires, pour fermer l'anneau;
c) entre les deux manchons élastomères (3, 4) se trouve un espace creux (6) qui, par une conduite de liaison (10, 11) qui en sort, est relié à un dispositif (9) de mesure de la pression qui permet un contrôle de la surpression ou de la dépression régnant dans l'espace creux (6);
c) dans cet espace creux (6) se trouve, au moins pendant la durée du contrôle, un fluide liquide ou gazeux comme agent de contrôle, en surpression ou en dépression.

2. Raccord de tuyaux selon la revendication 1, caractérisé par le fait que pour supporter les manchons (3, 4), un troisième anneau de serrage, flottant, est monté entre chacun des deux anneaux de serrage extérieurs (5).

3. Raccord de tuyaux selon la revendication 1, caractérisé par le fait que les anneaux de serrage (5) recouvrent et supportent la totalité du manchon élastomère (3, 4) à l'exception d'une étroite fente médiane.

4. Raccord de tuyaux selon la revendication 1, caractérisé par le fait qu'un unique anneau de serrage (5), de préférence en acier inoxydable, recouvre la totalité du manchon élastomère (3, 4).

5. Raccord de tuyaux selon la revendication 4, caractérisé par le fait qu'au lieu d'un manchon élastomère large (3, 4) on emploie deux profilés d'étanchéité étroits à chacune des extrémités de tuyau.

6. Raccord de tuyaux selon la revendication 1 ou 2, caractérisé par le fait que les éléments de serrage (5) qui collaborent avec un manchon (3, 4) sont chacun conçus avec un profil, en particulier un profil en U, et que les profils orientés l'un vers l'autre servent de guidage pour des tôles d'acier légères que l'on peut enfiler ultérieurement pour supporter les manchons.

7. Raccord de tuyaux selon l'une des revendication 1 à 6, caractérisé par le fait que l'espace creux (6) est relié à une conduite (8), obturable, d'agent de contrôle qui conduit à une source, séparable, de surpression ou de dépression.

8. Raccord de tuyaux selon l'une des revendication 1 à 7, caractérisé par le fait que le dispositif (9) de mesure de la pression est monté sur la conduite (8) d'agent de contrôle.

9. Raccord de tuyaux selon l'une des revendication 1 à 8, caractérisé par le fait que la conduite (8) d'agent de contrôle passe, au moins sur un tronçon partiel de sa longueur totale, à l'intérieur de la paroi de l'un des tuyaux (1) ou des deux.

10. Raccord de tuyaux selon les revendications 1 à 9, caractérisé par le fait que les espaces creux (6) de plusieurs raccords de tuyaux peuvent être reliés à une seule et même conduite (8) d'agent de contrôle.

11. Raccord de tuyaux selon l'une des revendication 1 à 10, caractérisé par le fait que le dispositif (9) de mesure de la pression est relié à un émetteur de signaux qui se déclenche automatiquement lorsqu'est atteinte une surpression ou une dépression prédéterminée ou sous pression atmosphérique normale.

12. Raccord de tuyaux selon l'une des revendication 1 à 11, caractérisé par le fait qu'en cas de perte d'étanchéité, on peut réparer la garniture d'étanchéité en resserrant les anneaux de serrage (5) ou en remplaçant au moins l'un des deux manchons (3, 4).

13. Raccord de tuyaux selon l'une des revendication 1 à 12, caractérisé par le fait que pour protéger la garniture d'étanchéité (3) située à l'intérieur, un anneau d'étanchéité traditionnel (2) est disposé sur la face du raccord de tuyaux exposée aux eaux souterraines.
